# EUROPEAN PATENT APPLICATION

(11) **EP 2 866 390 A1**
(43) Date of publication of application: **29.04.2015**
(21) Application number: 13823456.2
(22) Date of filing: 14.01.2013
(51) Int. Cl.: H04L 12/46

(54) **COMMUNICATION METHOD AND SYSTEM**

(30) Priority: 26.07.2012 CN 201210260757
(71) Applicant: Huawei Technologies Co., Ltd., Longgang District Shenzhen, Guangdong 518129 (CN)
(72) Inventor: ZHENG, Ming, Shenzhen Guangdong 518129 (CN); JIANG, Xingfeng, Shenzhen Guangdong 518129 (CN)
(74) Representative: Lord, Michael
(86) International application number: PCT/CN2013/070409
(87) International publication number: WO 2014/015664

(57) **Abstract**

The present invention belongs to the field of communications technologies, and discloses a communications method and system. When a central control point learns that a virtual machine of a tenant is deployed on a first server, the central control point delivers, to the first server, a first local virtual local area network identifier VLAN ID pre-configured for the tenant, so that a virtual switch vSwitch of the first server stores a correspondence between the tenant and the first local VLAN ID and can control, according to the correspondence, communication between virtual machines of the tenant in a top of rack switch ToR to which the first server belongs; the central control point delivers, to a first ToR, a first mapping relationship that is between a global VLAN ID and the first local VLAN ID and is pre-configured for the tenant, so that the first ToR stores the first mapping relationship between the global VLAN ID and the first local VLAN ID and can control communication between virtual machines of the tenant in different servers according to the first mapping relationship.

## Description

### CROSS-REFERENCE TO RELATED APPLICATION

This application claims priority to Chinese Patent Application No. 201210260757.5, filed with the Chinese Patent Office on July 26, 2012, and entitled "COMMUNICATIONS METHOD AND SYSTEM", which is incorporated herein by reference in its entirety.

### TECHNICAL FIELD

The present invention relates to the field of communications technologies, and in particular, to a communications method and system.

### BACKGROUND

A virtual local area network (Virtual Local Area Network in English, VLAN for short) is a data exchange technology of implementing a virtual working group by logically grouping local network devices according to network segments. In a cloud computing data center, a service provider can rent a group of computing resources and network resources to a client, to provide infrastructure as a service (Infrastructure as a Service in English, IAAS for short) for the client, and a client having such a group of resources is referred to as a tenant (Tenant). An existing VLAN packet uses 12 bits to indicate a virtual local area network identifier (VLAN ID), there may be a maximum of 4K VLAN IDs in a same network, and each tenant in the network is corresponding to a unique VLAN ID. When a new tenant is added onto a server, a system allocates a unique VLAN to the tenant. However, as the number of network users increases sharply, the number of existing tenants has far exceeded 4K, and an existing allocation manner of the virtual local area network cannot meet a requirement of the number of users. Therefore, how to overcome limitation on the number of tenants caused by the existing 4K VLANs is a problem to be resolved.

### SUMMARY

To resolve the problem of limitation on the number of tenants caused by 4K VLANs in an existing virtual local area network, embodiments of the present invention provide a communications method and system.

According to one aspect, the present invention provides a communications method, including:
when a central control point learns that a virtual machine of a tenant is deployed on a first server, delivering, by the central control point to the first server, a first local virtual local area network identifier VLAN ID pre-configured for the tenant, so that a virtual switch vSwitch of the first server stores a correspondence between the tenant and the first local VLAN ID and can control, according to the correspondence, communication between virtual machines of the tenant in a top of rack switch ToR to which the first server belongs; and
delivering, by the central control point to the first ToR, a first mapping relationship that is between a global VLAN ID and the first local VLAN ID and is pre-configured for the tenant, so that the first ToR stores the first mapping relationship between the global VLAN ID and the first local VLAN ID and can control communication between virtual machines of the tenant in different servers according to the first mapping relationship.

After the delivering, by the central control point to the first ToR, a first mapping relationship that is between a global VLAN ID and the first local VLAN ID and is pre-configured for the tenant, the method further includes:
receiving, by the vSwitch of the first server, a first packet sent by a first virtual machine of the tenant to a second virtual machine of the tenant, where the first packet carries a MAC address of the first virtual machine and a MAC address of the second virtual machine;
when the vSwitch determines, according to the MAC address of the second virtual machine and a MAC table, that the second virtual machine and the first virtual machine do not belong to a same server, searching, by the vSwitch, for the first local VLAN ID of the tenant according to the MAC address of the first virtual machine and the MAC table;
adding, by the vSwitch, the first local VLAN ID of the tenant into the first packet, to obtain a second packet; and
sending, by the vSwitch, the second packet to the first ToR to which the first server belongs, so that the first ToR sends the second packet to the second virtual machine.

After the sending, by the vSwitch, the second packet to the first ToR to which the first server belongs, the method further includes:
when the first ToR determines that the second virtual machine and the first virtual machine do not belong to a same ToR, obtaining, by the first ToR, the global VLAN ID of the tenant according to the first local VLAN ID in the received second packet and the locally-stored first mapping relationship between the first local VLAN ID and the global VLAN ID of the tenant;
converting, by the first ToR, the second packet into a third packet according to the global VLAN ID of the tenant, where the third packet carries the global VLAN ID of the tenant; and
sending, by the first ToR, the third packet to a second ToR to which the second virtual machine belongs, so that the second ToR sends the third packet to the second virtual machine.

After the sending, by the first ToR, the third packet to a second ToR to which the second virtual machine belongs, the method further includes:
parsing, by the second ToR, the third packet to obtain the global VLAN ID of the tenant, and obtaining an address of a second server in which the second virtual machine is located;
searching, by the second ToR according to the global VLAN ID, for a locally-stored second mapping relationship between a second local VLAN ID and the global VLAN ID of the tenant, to obtain the second local VLAN ID of the tenant in the second ToR;
converting, by the second ToR, the third packet into a fourth packet according to the second local VLAN ID, where the fourth packet carries the second local VLAN ID; and
sending, by the second ToR, the fourth packet to the second server according to the address of the second server, so that a vSwitch of the second server sends the fourth packet to the second virtual machine.

The method further includes:
when the central control point learns that the virtual machine of the tenant is migrated from the first server to a target server, and the target server does not belong to the first ToR or the second ToR, allocating, by the central control point to the tenant, a third local VLAN ID corresponding to a third ToR to which the target server belongs; and
delivering, by the central control point, the third local VLAN ID to the target server, and delivering a mapping relationship between the global VLAN ID of the tenant and the third local VLAN ID of the tenant to the third ToR to which the target server belongs.

According to another aspect, the present invention provides a communications system, including: a central control point, a first server, and a first top of rack switch ToR to which the first server belongs, where:
the central control point is configured to: when learning that a virtual machine of a tenant is deployed on the first server, deliver, to the first server, a first local virtual local area network identifier VLAN ID pre-configured for the tenant, so that a virtual switch vSwitch of the first server stores a correspondence between the tenant and the first local VLAN ID and can control, according to the correspondence, communication between virtual machines of the tenant in the first ToR;
the central control point is further configured to deliver, to the first ToR, a first mapping relationship that is between a global VLAN ID and the first local VLAN ID and is pre-configured for the tenant; and
the first ToR is configured to receive and store the first mapping relationship that is between the global VLAN ID and the first local VLAN ID, is pre-configured for the tenant, and is delivered by the central control point, and control communication between virtual machines of the tenant in different servers according to the first mapping relationship.

The system further includes:
the vSwitch of the first server, configured to: after the central control point delivers, to the first ToR, a first mapping relationship that is between the global VLAN ID and the first local VLAN ID and is pre-configured for the tenant, receive a first packet sent by a first virtual machine of the tenant to a second virtual machine, where the first packet carries a MAC address of the first virtual machine and a MAC address of the second virtual machine; when determining, according to the MAC address of the second virtual machine and a MAC table, that the second virtual machine and the first virtual machine do not belong to a same server, search for the first local VLAN ID of the tenant according to the MAC address of the first virtual machine and the MAC table; add the first local VLAN ID of the tenant into the first packet, to obtain a second packet; and send the second packet to the first ToR to which the first server belongs, so that the first ToR sends the second packet to the second virtual machine.

The system further includes: a second ToR to which the second virtual machine belongs, and after the vSwitch of the first server sends the second packet to the first ToR to which the first server belongs,
the first ToR is further configured to: when determining that the second virtual machine and the first virtual machine do not belong to a same ToR, obtain the global VLAN ID of the tenant according to the first local VLAN ID in the received second packet and the locally-stored first mapping relationship between the first local VLAN ID and the global VLAN ID of the tenant; convert the second packet into a third packet according to the global VLAN ID of the tenant, where the third packet carries the global VLAN ID of the tenant; and send the third packet to the second ToR, so that the second ToR sends the third packet to the second virtual machine.

The system further includes: a second server in which the second virtual machine is located, and after the first ToR sends the third packet to the second ToR,
the second ToR is configured to parse the third packet to obtain the global VLAN ID of the tenant, and obtain an address of the second server in which the second virtual machine is located; search, according to the global VLAN ID, for a locally-stored second mapping relationship between a second local VLAN ID and the global VLAN ID of the tenant, to obtain the second local VLAN ID of the tenant in the second ToR; convert the third packet into a fourth packet according to the second local VLAN ID, where the fourth packet carries the second local VLAN ID; and send the fourth packet to the second server according to the address of the second server, so that a vSwitch of the second server sends the fourth packet to the second virtual machine.

The central control point is further configured to: when learning that the virtual machine of the tenant is migrated from the first server to a target server, and the target server does not belong to the first ToR or the second ToR, allocate, to the tenant, a third local VLAN ID corresponding to a third ToR to which the target server belongs; and
the central control point is further configured to deliver the third local VLAN ID to the target server, and deliver a mapping relationship between the global VLAN ID of the tenant and the third local VLAN ID of the tenant to the third ToR to which the target server belongs.

Beneficial effects achieved by the technical solutions provided in the embodiments of the present invention are as follows: When a central control point learns that a virtual machine of a tenant is deployed on a first server, the central control point delivers, to the first server, a first local virtual local area network identifier VLAN ID pre-configured for the tenant, so that a virtual switch vSwitch of the first server stores a correspondence between the tenant and the first local VLAN ID and can control, according to the correspondence, communication between virtual machines of the tenant in a ToR to which the first server belongs; the central control point delivers, to the first ToR, a first mapping relationship that is between a global VLAN ID and the first local VLAN ID and is pre-configured for the tenant, so that the first ToR stores the first mapping relationship between the global VLAN ID and the first local VLAN ID and can control communication between virtual machines of the tenant in different servers according to the first mapping relationship. By using a local VLAN ID and a mapping relationship between a global VLAN ID and a local VLAN ID delivered by the central control point, communication between virtual machines of a same tenant in a same ToR can be implemented based on the local VLAN ID, and communication between virtual machines of a same tenant in different ToRs can also be implemented based on the mapping relationship between the global VLAN ID and the local VLAN ID. Therefore, division of a data center network into two logical layers is implemented, and the number of tenants isolated by using VLANs is enabled to exceed the limit of 4K.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of a communications system according to an embodiment of the present invention;
FIG. 2 is a schematic structural diagram of another communications system according to an embodiment of the present invention;
FIG. 3 is a schematic structural diagram of a central control point according to an embodiment of the present invention;
FIG. 4 is a flowchart of a communications method according to an embodiment of the present invention;
FIG. 5 is a flowchart of another communications method according to an embodiment of the present invention;
FIG. 6 is a schematic diagram of a packet format according to an embodiment of the present invention; and
FIG. 7 is a schematic diagram of another packet format according to an embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

In an existing data center, usually, one access switch is deployed for one rack, and is placed on the top of the rack. This access switch is referred to as a ToR (Top of Rack, ToR for short). One ToR is connected to multiple servers, each server includes multiple virtual machines, each server is corresponding to one virtual switch, and the multiple virtual machines are connected to the virtual switch through ports.

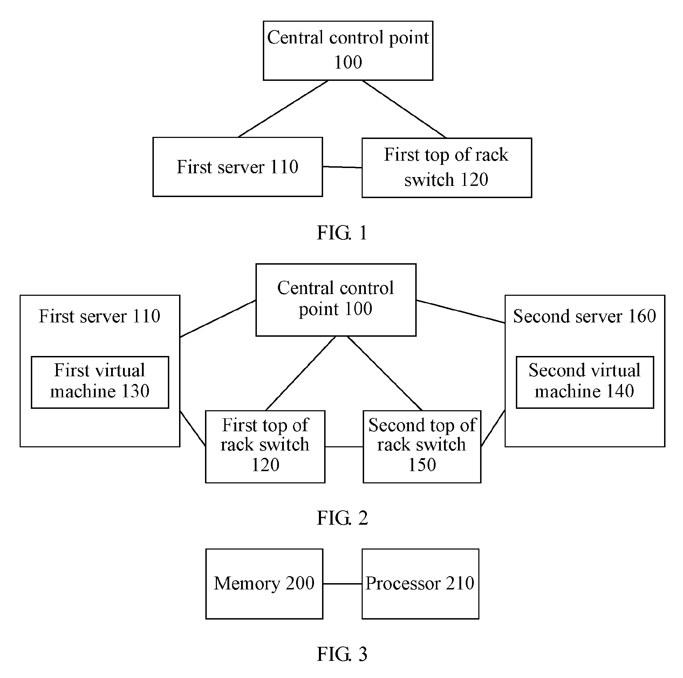

Referring to FIG. 1, an embodiment of the present invention provides a communications system, including: a central control point 100, a first server 110, and a first top of rack switch ToR 120 to which the first server belongs.

In this embodiment, a server may be independently deployed in a data center network and is used as a central control point; or a function of an existing network management server may be extended, and the network management server is used as the central control point. A manner of implementing the central control point is not specifically limited in this embodiment. It should be noted that, when a server is independently deployed in the data center network and is used as the central control point, a location of the server in the network is parallel with a location of the network management server in the network, and the server can communicate with the network management server, to learn a virtual machine migration event or an arrangement event of a virtual machine of a newly added tenant.

In this embodiment, after the central control point is introduced, by using a top of rack switch as a boundary, a virtual local area network is divided into two parts: a core layer and an access layer. The core layer refers to networks above the ToR and includes all networks between the ToR and a data center network (Data Center Network, DCN for short). In this embodiment, a global VLAN ID is allocated at the core layer to a tenant, and the global VLAN ID includes a server tag (service Tag, sTag for short) and a custom tag (custom Tag, cTag for short). A packet of the tenant at the core layer uses the global VLAN ID, the global VLAN ID is valid in a DCN above the ToR, and a global VLAN ID of each tenant is unique in the DCN network. The access layer refers to networks below the ToR, and includes a network from a virtual machine to a vSwitch (a virtual switch) and a network from the vSwitch to the ToR. A local VLAN ID is used at the access layer, the local VLAN ID includes a cTag, and is valid below the ToR. Local VLAN IDs of tenants are different. In this embodiment, each ToR is a local VLAN management domain, the local VLAN ID is only valid in a ToR to which the local VLAN ID belongs. Local VLANs in different ToRs do not interfere with each other. In this embodiment, a central control point is added into a network, and is responsible for management, mapping, and distribution of a global VLAN ID and a local VLAN ID that are corresponding to the tenant.

In this embodiment, the central control point 100 is configured to: when learning that a virtual machine of a tenant is deployed on the first server, deliver, to the first server 110, a first local virtual local area network identifier VLAN ID pre-configured for the tenant, so that a virtual switch vSwitch of the first server 110 stores a correspondence between the tenant and the first local VLAN ID and can control, according to the correspondence, communication between virtual machines of the tenant in the first ToR 120.

The central control point 100 is further configured to deliver, to the first ToR 120, a mapping relationship that is between a global VLAN ID and the first local VLAN ID and is pre-configured for the tenant.

The first ToR 120 is configured to receive and store the mapping relationship that is between the global VLAN ID and the first local VLAN ID, is pre-configured for the tenant, and is delivered by the central control point 100, and control communication between virtual machines of the tenant in different servers according to the mapping relationship.

Further, referring to FIG. 2, a first virtual machine 130 of the tenant and a second virtual machine 140 of the tenant are disposed on the first server 110, and after the central control point 100 delivers, to the first ToR 120, the mapping relationship that is between the global VLAN ID and the first local VLAN ID and is pre-configured for the tenant,
the vSwitch of the first server 110 is configured to receive a first packet sent by the first virtual machine 130 of the tenant to the second virtual machine 140, where the first packet carries a MAC address of the first virtual machine 130 and a MAC address of the second virtual machine 140; when determining, according to the MAC address of the second virtual machine 140 and a MAC table, that the second virtual machine 140 and the first virtual machine 130 do not belong to a same server, search for the first local VLAN ID of the tenant according to the MAC address of the first virtual machine 130 and the MAC table; add the first local VLAN ID of the tenant into the first packet, to obtain a second packet; and send the second packet to the first ToR 120 to which the first server 110 belongs, so that the first ToR 120 sends the second packet to the second virtual machine 140.

Further, referring to FIG. 2, the system further includes: a second ToR 150 to which the second virtual machine 140 belongs, and after the vSwitch of the first server 110 sends the second packet to the first ToR to which the first server belongs,
the first ToR 120 is further configured to: when determining that the second virtual machine 140 and the first virtual machine 130 do not belong to a same ToR, obtain the global VLAN ID of the tenant according to the first local VLAN ID in the received second packet and a locally-stored first mapping relationship between the first local VLAN ID and the global VLAN ID of the tenant; convert the second packet into a third packet according to the global VLAN ID of the tenant, where the third packet carries the global VLAN ID of the tenant; and send the third packet to the second ToR 150, so that the second ToR 150 sends the third packet to the second virtual machine 140.

Further, referring to FIG. 2, the system further includes: a second server 160 in which the second virtual machine 140 is located, and after the first ToR 120 sends the third packet to the second ToR 150,
the second ToR 150 is configured to parse the third packet to obtain the global VLAN ID of the tenant, and obtain the second server 160 in which the second virtual machine is located; search, according to the global VLAN ID, for a locally-stored second mapping relationship between a second local VLAN ID and the global VLAN ID of the tenant, to obtain the second local VLAN ID of the tenant in the second ToR 150; convert the third packet into a fourth packet according to the second local VLAN ID, where the fourth packet carries the second local VLAN ID; and send the fourth packet to the second server 160 according to an address of the second server 160, so that a vSwitch of the second server 160 sends the fourth packet to the second virtual machine 140.

Further, in this embodiment, the central control point is further configured to: when learning that the virtual machine of the tenant is migrated from the first server to a target server, and the target server does not belong to the first ToR or the second ToR, allocate, to the tenant, a third local VLAN ID corresponding to a third ToR to which the target server belongs.

The central control point is further configured to deliver the third local VLAN ID to the target server, and deliver a mapping relationship between the global VLAN ID of the tenant and the third local VLAN ID of the tenant to the third ToR to which the target server belongs.

If the target server belongs to the first ToR or the second ToR, the central control point does not need to allocate the third local VLAN ID.

Beneficial effects achieved by the technical solution provided in this embodiment of the present invention are as follows: When a central control point learns that a virtual machine of a tenant is deployed on a first server, the central control point delivers, to the first server, a first local virtual local area network identifier VLAN ID pre-configured for the tenant, so that a virtual switch vSwitch of the first server stores a correspondence between the tenant and the first local VLAN ID and can control, according to the correspondence, communication between virtual machines of the tenant in a ToR to which the first server belongs; the central control point delivers, to the first ToR, a first mapping relationship that is between a global VLAN ID and the first local VLAN ID and is pre-configured for the tenant, so that the first ToR stores the first mapping relationship between the global VLAN ID and the first local VLAN ID and can control communication between virtual machines of the tenant in different servers according to the first mapping relationship. By using a local VLAN ID and a mapping relationship between a global VLAN ID and a local VLAN ID delivered by the central control point, communication between virtual machines of a same tenant in a same ToR can be implemented based on the local VLAN ID, and communication between virtual machines of a same tenant in different ToRs can also be implemented based on the mapping relationship between the global VLAN ID and the local VLAN ID. Therefore, division of a data center network into two logical layers is implemented, and the number of tenants isolated by using VLANs is enabled to exceed the limit of 4K.

It should be noted that, the communications system provided in the foregoing embodiment is only described by using division of the foregoing function modules as an example. In a practical application, the foregoing functions may be allocated to and completed by different function modules as required, that is, internal structures of a device and a system can be divided into different function modules, to complete all or some of the functions described above.

Referring to FIG. 3, this embodiment provides a central control point, and the central control point includes: a memory 200 and a processor 210.

The memory 200 is configured to store a first local VLAN ID and a global VLAN ID that are pre-configured for a tenant.

The processor 210 is configured to: when it is learnt that a virtual machine of the tenant is deployed on a first server, deliver, to the first server, a first local virtual local area network identifier VLAN ID pre-configured for the tenant, so that a virtual switch vSwitch of the first server stores a correspondence between the tenant and the first local VLAN ID and can control, according to the correspondence, communication between virtual machines of the tenant in a top of rack switch ToR to which the first server belongs.

The processor 210 is further configured to deliver, to the first ToR, a first mapping relationship that is between a global VLAN ID and the first local VLAN ID and is pre-configured for the tenant, so that the first ToR stores the first mapping relationship between the global VLAN ID and the first local VLAN ID and can control communication between virtual machines of the tenant in different servers according to the first mapping relationship.

Further, the processor 210 is further configured to: when learning that the virtual machine of the tenant is migrated from the first server to a target server, and the target server does not belong to the first ToR or a second ToR, allocate, to the tenant, a third local VLAN ID corresponding to a third ToR to which the target server belongs.

The processor 210 is further configured to deliver the third local VLAN ID to the target server, and deliver a mapping relationship between the global VLAN ID of the tenant and the third local VLAN ID of the tenant to the third ToR to which the target server belongs.

In this embodiment, the processor 210 may be one or a combination of a CPU (Central Processing Unit, central processing unit), a DSP (Digital Signal Processor, digital signal processor), and an ASIC (Application Specific Integrated Circuit, application specific integrated circuit), which is not specifically limited in this embodiment.

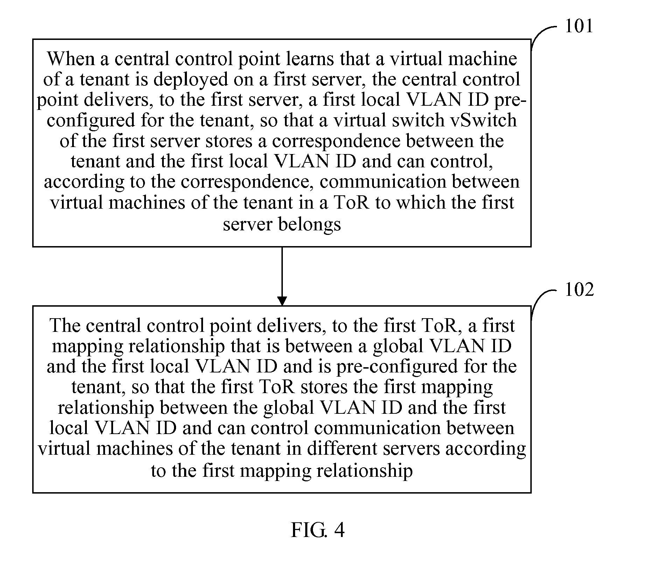

Referring to FIG. 4, based on the embodiment shown in FIG. 1, this embodiment provides a communications method, including:

101: When a central control point learns that a virtual machine of a tenant is deployed on a first server, the central control point delivers, to the first server, a first local VLAN ID pre-configured for the tenant, so that a virtual switch vSwitch of the first server stores a correspondence between the tenant and the first local VLAN ID and can control, according to the correspondence, communication between virtual machines of the tenant in a ToR to which the first server belongs.

102: The central control point delivers, to the first ToR, a first mapping relationship that is between a global VLAN ID and the first local VLAN ID and is pre-configured for the tenant, so that the first ToR stores the first mapping relationship between the global VLAN ID and the first local VLAN ID and can control communication between virtual machines of the tenant in different servers according to the first mapping relationship.

After the central control point delivers, to the first ToR, a mapping relationship that is between a global VLAN ID and the first local VLAN ID and is pre-configured for the tenant, the method further includes:
receiving, by the vSwitch, a first packet sent by a first virtual machine of the tenant to a second virtual machine of the tenant, where the first packet carries a MAC address of the first virtual machine and a MAC address of the second virtual machine;
when the vSwitch determines that the second virtual machine and the first virtual machine do not belong to a same server, searching, by the vSwitch, for the first local VLAN ID of the tenant according to the MAC address of the first virtual machine and a MAC table;
adding, by the vSwitch, the first local VLAN ID of the tenant into the first packet, to obtain a second packet; and
sending, by the vSwitch, the second packet to the first ToR to which the first server belongs, so that the first ToR sends the second packet to the second virtual machine.

Further, after the vSwitch sends the second packet to the first ToR to which the first server belongs, the method further includes:
when the first ToR determines that the second virtual machine and the first virtual machine do not belong to a same ToR, obtaining, by the first ToR, the global VLAN ID of the tenant according to the first local VLAN ID in the received second packet and the locally-stored first mapping relationship between the first local VLAN ID and the global VLAN ID of the tenant;
converting, by the first ToR, the second packet into a third packet according to the global VLAN ID of the tenant, where the third packet carries the global VLAN ID of the tenant; and
sending, by the first ToR, the third packet to a second ToR to which the second virtual machine belongs, so that the second ToR sends the third packet to the second virtual machine.

After the first ToR sends the third packet to the second ToR to which the second virtual machine belongs, the method further includes:
parsing, by the second ToR, the third packet to obtain the global VLAN ID of the tenant, and obtaining an address of a second server in which the second virtual machine is located;
searching, by the second ToR according to the global VLAN ID, for a locally-stored second mapping relationship between a second local VLAN ID and the global VLAN ID of the tenant, to obtain the second local VLAN ID of the tenant in the second ToR;
converting, by the second ToR, the third packet into a fourth packet according to the second local VLAN ID, where the fourth packet carries the second local VLAN ID; and
sending, by the second ToR, the fourth packet to the second server according to the address of the second server, so that a vSwitch of the second server sends the fourth packet to the second virtual machine.

Further, the method further includes:
when the central control point learns that the virtual machine of the tenant is migrated from the first server to a target server, and the target server does not belong to the first ToR or the second ToR, allocating, by the central control point to the tenant, a third local VLAN ID corresponding to a third ToR to which the target server belongs; and
delivering, by the central control point, the third local VLAN ID to the target server, and delivering a mapping relationship between the global VLAN ID of the tenant and the third local VLAN ID of the tenant to the third ToR to which the target server belongs.

Beneficial effects of this embodiment include: when a central control point learns that a virtual machine of a tenant is deployed on a first server, the central control point delivers, to the first server, a first local virtual local area network identifier VLAN ID pre-configured for the tenant, so that a virtual switch vSwitch of the first server stores a correspondence between the tenant and the first local VLAN ID and can control, according to the correspondence, communication between virtual machines of the tenant in a ToR to which the first server belongs; the central control point delivers, to the first ToR, a first mapping relationship that is between a global VLAN ID and the first local VLAN ID and is pre-configured for the tenant, so that the first ToR stores the first mapping relationship between the global VLAN ID and the first local VLAN ID and can control communication between virtual machines of the tenant in different servers according to the first mapping relationship. By using a local VLAN ID and a mapping relationship between a global VLAN ID and a local VLAN ID delivered by the central control point, communication between virtual machines of a same tenant in a same ToR can be implemented based on the local VLAN ID, and communication between virtual machines of a same tenant in different ToRs can also be implemented based on the mapping relationship between the global VLAN ID and the local VLAN ID. Therefore, division of a data center network into two logical layers is implemented, and the number of tenants isolated by using VLANs is enabled to exceed the limit of 4K.

Based on the embodiment shown in FIG. 1, it is assumed that a tenant 1 exists in a DCN network, a virtual machine 1 and a virtual machine 3 are virtual machines (VM) of the tenant 1 (Tenant 1), a tenant 2 (Tenant2) needs to be added into the DCN network, and a virtual machine 2 and a virtual machine 4 that are in a first server are allocated to the tenant 2 for use. When the tenant 2 is added, a network administrator configures a global VLAN ID and a local VLAN ID of the tenant 2 on a central control point, where the global VLAN ID and the local VLAN ID may be manually configured by the network administrator or may be configured by using software, which is not specifically limited in this embodiment. Specifically, the central control point can separately store a global VLAN ID and a local VLAN ID of each tenant in a table form. As shown in Table 1 and Table 2, the global VLAN IDs and the local VLAN IDs of tenants are separately stored.

**Table 1**

| **Tenant Name** | **Global VLAN ID** |
|---|---|
| Tenant 1 | 1000+1001 |
| Tenant 2 | 2000+2001 |

**Table 2**

| **Tenant Name** | **Local VLAN ID** |
|---|---|
| Tenant 1 | 500 |
| Tenant 2 | 501 |

In Table 1, a global VLAN ID of the tenant 1 is 1000+1001, a global VLAN ID allocated to the new tenant 2 is 2000+2001, and a global VLAN table of each tenant is maintained in the central control point. In Table 2, a local VLAN ID of the tenant 1 is 500, and a local VLAN ID newly allocated to the tenant 2 is 501.

When the central control point learns that a virtual machine of a tenant is deployed on a server, the central control point delivers, to a vSwitch of the server, a correspondence between the local VLAN ID of the tenant 2 and the tenant 2 in Table 2, so that the vSwitch can control, according to the local VLAN ID, communication between virtual machines of the tenant in a ToR to which the first server belongs, to ensure that a local VLAN in the ToR remains smooth. Further, in this embodiment, if the vSwitch stores a media access control (Media Access Control, MAC for short) table, after receiving the local VLAN ID of the tenant, the vSwitch correspondingly stores the local VLAN ID into the MAC table, such as a MAC table shown in FIG. 3, where the MAC table stores a port number and a local VLAN ID of a virtual machine corresponding to each tenant.

**Table 3**

| **MAC Address** | **Local VLAN ID** | **Port Number of Virtual Switch** |
|---|---|---|
| MAC1 (tenant 1VM1) | VLAN1 | Port2 (local port) |
| MAC2 (tenant 1VM2) | VLAN1 | Port3 (local port) |
| MAC3 (tenant1VM3) | VLAN1 | Port1 (upstream port) |
| MAC4 (tenant2VM1) | VLAN2 | Port1 (upstream port) |

In Table 3, an upstream port in the column of **Port Number of Virtual Switch** indicates that a virtual machine corresponding to a port number is not in a server in which the virtual switch is located, and a local port in the column of Port Number of Virtual Switch indicates that a virtual machine corresponding to a port number and the virtual switch belong to a same server, which is similar to that in the prior art, and is not described in this embodiment again. Local VALN IDs of each tenant in a same ToR are the same, and therefore, local VLAN IDs corresponding to all virtual machines of each tenant in a same ToR are the same, for example, local VLAN IDs corresponding to the virtual machines 1, 2, and 3 corresponding to the tenant 1 in Table 3 are all VLAN1.

On the other hand, the central control point delivers, to a ToR, a mapping relationship between a local VLAN ID of the tenant 2 in the ToR to which the server belongs and the global VLAN ID of the tenant 2 according to the local VLAN ID corresponding to the tenant 2 in Table 2 and the global VLAN ID corresponding to the tenant 2 in Table 1, and the ToR stores the mapping relationship between the global VLAN ID and the local VLAN ID that are corresponding to the tenant 2. When a packet carrying the local VLAN ID of the tenant 2 needs to communicate with the DCN, the packet is converted into a packet carrying the global VLAN ID of the tenant 2, so that the packet can be transmitted at a core layer, and then communication between virtual machines of the tenant in different ToRs can be controlled according to the mapping relationship. As shown in Table 4, a mapping relationship delivered by the central control point to the ToR is as follows:

**Table 4**

| **Tenant** | **Local VLAN ID** | **Global VLAN ID** |
|---|---|---|
| Tenant 2 | 501 | 2000+2001 |

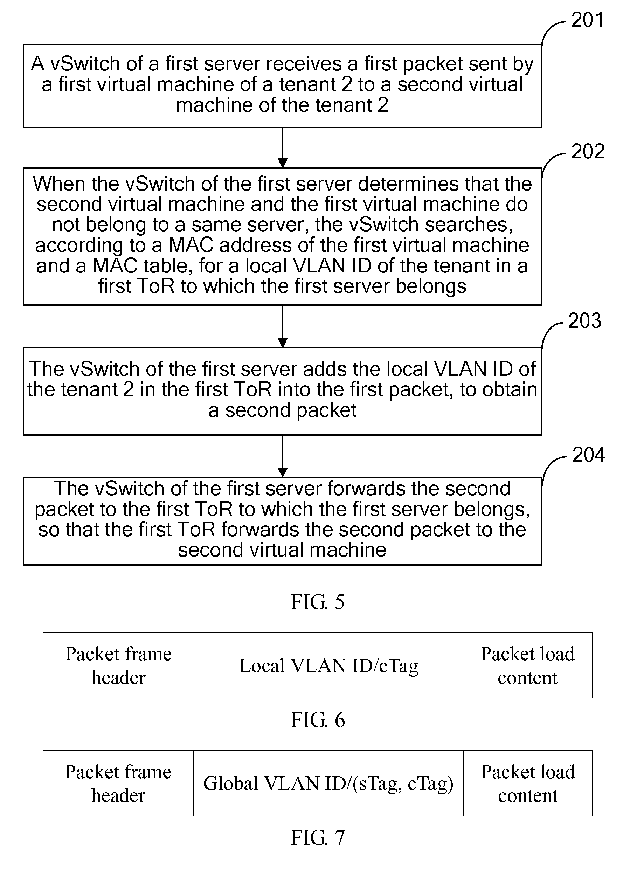

Referring to FIG. 5, based on the embodiment shown in FIG. 1, a procedure of another communications method provided in this embodiment includes:

201: A vSwitch of a first server receives a first packet sent by a first virtual machine of a tenant 2 to a second virtual machine of the tenant 2.

In this step, the first virtual machine refers to any virtual machine of the tenant 2, the second virtual machine refers to a virtual machine of the tenant 2 except the first virtual machine, and both the first virtual machine and the second virtual machine serve the tenant 2. A packet sent by the first virtual machine to the second virtual machine needs to be forwarded by the vSwitch of the first server. The first packet includes a packet frame header and packet load, and carries a MAC address of the first virtual machine and a MAC address of the second virtual machine.

202: When the vSwitch of the first server determines that the second virtual machine and the first virtual machine do not belong to a same server, the vSwitch searches, according to the MAC address of the first virtual machine and a MAC table, for a local VLAN ID of the tenant in a first ToR to which the first server belongs.

In this embodiment, if the MAC table shown in Table 3 is maintained in the vSwitch, the vSwitch may forward the packet according to the MAC table. Specifically, the vSwitch searches the MAC table for a port number corresponding to the MAC address of the second virtual machine. If the port number is corresponding to a local port, the vSwitch determines that the second virtual machine and the first virtual machine belong to a same server, and directly sends a second packet to the second virtual machine; and if a port number corresponding to the MAC address of the second virtual machine is an upstream port, the vSwitch determines that the first virtual machine and the second virtual machine are not on a same server. A method of the determining herein is similar to that in the prior art, and is not described in this embodiment again.

In this embodiment, when determining that the second virtual machine and the first virtual machine do not belong to a same server, the vSwitch searches the MAC table for the local VLAN ID of the tenant corresponding to the MAC address of the first virtual machine.

On the other hand, if there is no MAC table in the vSwitch, the vSwitch broadcasts the first packet, and all virtual machines in a VLAN may receive the packet. However, only a virtual machine whose MAC address is the same as the MAC address of the second virtual machine in the packet performs processing and gives a response, which is similar to that in the prior art, and is not described in this embodiment again.

203: The vSwitch of the first server adds the local VLAN ID of the tenant 2 in the first ToR into the first packet, to obtain a second packet.

In this step, the vSwitch converts the first packet into the second packet, that is, the vSwitch adds the local VLAN ID of the tenant into the first packet. A specific method of the converting is similar to a packet processing method in the prior art, and is not described in this embodiment again. Specifically, a format of the obtained second packet is shown in FIG. 6, where the local VLAN ID is added into the original first packet.

204: The vSwitch of the first server sends the second packet to the first ToR to which the first server belongs, so that the first ToR sends the second packet to the second virtual machine.

In this step, the vSwitch of the first server sends the second packet to the first ToR to which the first server belongs, so that the first ToR sends the second packet to the second virtual machine.

Specifically, that the first ToR sends the second packet to the second virtual machine includes:

1) When the first ToR determines that the second virtual machine and the first virtual machine do not belong to a same ToR, the first ToR obtains the global VLAN ID of the tenant according to a local VLAN ID in the received second packet and a locally-stored mapping relationship between the local VLAN ID and the global VLAN ID of the tenant.

In this step, specifically, that the first ToR determines whether the second virtual machine and the first virtual machine belong to a same ToR belongs to the prior art, and is not described in this embodiment again.

In this embodiment, the mapping relationship between the local VLAN ID of the tenant 2 in the first ToR and the global VLAN ID of the tenant 2 is stored in the first ToR. Therefore, when receiving the second packet, the first ToR parses the second packet to obtain the local VLAN ID carried in the second packet, and finds, according to the pre-stored mapping relationship, the global VLAN ID corresponding to the local VLAN ID in the ToR.

On the other hand, when the first ToR determines, according to the MAC address of the second virtual machine, that the second virtual machine and the first virtual machine belong to a same ToR, the first ToR sends the second packet to a vSwitch of a server in which the second virtual machine is located, so that the vSwitch sends the second packet to the second virtual machine.

2) The first ToR converts the second packet into a third packet according to the global VLAN ID of the tenant, where the third packet carries the global VLAN ID of the tenant.

In this step, the second packet is converted into the third packet according to the global VLAN ID, where the third packet carries the global VLAN ID of the tenant 2. As shown in Table 1, the global VLAN ID of the tenant 2 is 2000+2001, and the third packet carries two layers of the global VLAN ID. Specifically, a format of the third packet is shown in FIG. 7, and the third packet includes the global VLAN ID.

3) The first ToR sends the third packet to a second ToR to which the second virtual machine belongs, so that the second ToR sends the third packet to the second virtual machine.

In this step, the first ToR determines the second ToR to which the second virtual machine belongs, and sends the third packet to the second ToR. A process during which the first ToR determines the second ToR to which the second virtual machine belongs is similar to that in the prior art, and is not described in this embodiment again.

Because a local VLAN ID is valid in each ToR, and local VLAN IDs corresponding to each tenant in different ToRs are also different. However, the global VLAN ID of the tenant 2 is unique in a data center network. Therefore, when receiving the third packet sent by the first ToR, the second ToR parses the third packet to obtain the global VLAN ID of the tenant, determines, according to the MAC address of the second virtual machine carried in the third packet, a second server in which the second virtual machine is located, searches for the mapping relationship between the global VLAN ID and the local VLAN ID according to the global VLAN ID, to obtain the local VLAN ID of the tenant in the second ToR, and converts the third packet into a fourth packet according to the local VLAN ID, where the fourth packet carries a second local VLAN ID of the tenant 2. A process during which the second ToR obtains an address of the second server is similar to that in the prior art, and is not described in this embodiment again.

In this embodiment, the second ToR further sends the fourth packet to the second server according to the address of the second server, a vSwitch of the second server searches, according to a MAC table stored in the vSwitch, for a port number that is corresponding to the MAC address of the second virtual machine and is in the vSwitch of the second server, and sends the fourth packet to the second virtual machine according to the port number.

On the other hand, in this embodiment, two virtual machines (VM), VM2 and VM4, of the tenant Tenant2 exist in a current data center. The central control point has already separately delivered the local VLAN ID and the global VLAN ID of the Tenant2 to a vSwitch of a server 1 and a ToR1. In this case, the VM4 needs to be migrated into a server 2 in a ToR2, and the following operations need to be performed:

1. The central control point learns a migration event from a virtual machine management center, allocates a local VLAN ID corresponding to the server 2 to the tenant 2, and delivers the local VLAN ID to a vSwitch of the server 2; where
in this step, the central control point allocates a third local VLAN ID to the Tenant2 in a local VLAN table of the ToR2, and then delivers, if it is assumed that the allocated third VLAN ID is 601, the VLAN ID 601 to the vSwitch of the target server 2 in virtual migration.

2. The global VLAN ID of the tenant 2 remains unchanged, and the central control point delivers a mapping relationship between the global VLAN ID and the newly allocated third local VLAN ID to a ToR to which the target server belongs.

3. Virtual migration: migrate the VM4 from the server1 to the server2.

The virtual migration is similar to that in the prior art, and is not described in this embodiment again.

Beneficial effects of this embodiment include: when a central control point learns that a virtual machine of a tenant is deployed on a first server, the central control point delivers, to the first server, a local virtual local area network identifier VLAN ID pre-configured for the tenant, so that a virtual switch vSwitch of the first server stores a correspondence between the tenant and the local VLAN ID and can control, according to the correspondence, communication between virtual machines of the tenant in a ToR to which the first server belongs; the central control point delivers, to the top of rack switch ToR to which the first server belongs, a mapping relationship that is between a global VLAN ID and the local VLAN ID and is pre-configured for the tenant, so that the first ToR stores the mapping relationship between the global VLAN ID and the local VLAN ID corresponding to the first server and can control communication between virtual machines of the tenant in different servers according to the mapping relationship. By using a local VLAN ID and a mapping relationship between a global VLAN ID and a local VLAN ID delivered by the central control point, communication between virtual machines of a same tenant in a same ToR can be implemented based on the local VLAN ID, and communication between virtual machines of a same tenant in different ToRs can also be implemented based on the mapping relationship between the global VLAN ID and the local VLAN ID. Therefore, division of a data center network into two logical layers is implemented, and the number of tenants isolated by using VLANs is enabled to exceed the limit of 4K.

In addition, the communications system and the communications method provided in the foregoing embodiments belong to a same concept, and for specific implementation processes, refer to the method embodiments, so the details are not described herein again.

The sequence numbers of the foregoing embodiments of the present invention are merely for convenience of description, and do not imply the preference among the embodiments.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely preferable embodiments of the present invention, but are not intended to limit the present invention. Any modification, equivalent replacement, and improvement made without departing from the spirit and principle of the present invention shall fall within the protection scope of the present invention.

## Claims

1. A communications method, comprising:
when a central control point learns that a virtual machine of a tenant is deployed on a first server, delivering, by the central control point to the first server, a first local virtual local area network identifier VLAN ID pre-configured for the tenant, so that a virtual switch vSwitch of the first server stores a correspondence between the tenant and the first local VLAN ID and can control, according to the correspondence, communication between virtual machines of the tenant in a top of rack switch ToR to which the first server belongs; and
delivering, by the central control point to the first ToR, a first mapping relationship that is between a global VLAN ID and the first local VLAN ID and is pre-configured for the tenant, so that the first ToR stores the first mapping relationship between the global VLAN ID and the first local VLAN ID and can control communication between virtual machines of the tenant in different servers according to the first mapping relationship.

2. The method according to claim 1, wherein after the delivering, by the central control point to the first ToR, a first mapping relationship that is between a global VLAN ID and the first local VLAN ID and is pre-configured for the tenant, the method further comprises:
receiving, by the vSwitch of the first server, a first packet sent by a first virtual machine of the tenant to a second virtual machine of the tenant, wherein the first packet carries a MAC address of the first virtual machine and a MAC address of the second virtual machine;
when the vSwitch determines, according to the MAC address of the second virtual machine and a MAC table, that the second virtual machine and the first virtual machine do not belong to a same server, searching, by the vSwitch, for the first local VLAN ID of the tenant according to the MAC address of the first virtual machine and the MAC table;
adding, by the vSwitch, the first local VLAN ID of the tenant into the first packet, to obtain a second packet; and
sending, by the vSwitch, the second packet to the first ToR to which the first server belongs, so that the first ToR sends the second packet to the second virtual machine.

3. The method according to claim 2, wherein after the sending, by the vSwitch, the second packet to the first ToR to which the first server belongs, the method further comprises:
when the first ToR determines that the second virtual machine and the first virtual machine do not belong to a same ToR, obtaining, by the first ToR, the global VLAN ID of the tenant according to the first local VLAN ID in the received second packet and the locally-stored first mapping relationship between the first local VLAN ID and the global VLAN ID of the tenant;
converting, by the first ToR, the second packet into a third packet according to the global VLAN ID of the tenant, wherein the third packet carries the global VLAN ID of the tenant; and
sending, by the first ToR, the third packet to a second ToR to which the second virtual machine belongs, so that the second ToR sends the third packet to the second virtual machine.

4. The method according to claim 3, wherein after the sending, by the first ToR, the third packet to a second ToR to which the second virtual machine belongs, the method further comprises:
parsing, by the second ToR, the third packet to obtain the global VLAN ID of the tenant, and obtaining an address of a second server in which the second virtual machine is located;
searching, by the second ToR according to the global VLAN ID, for a locally-stored second mapping relationship between a second local VLAN ID and the global VLAN ID of the tenant, to obtain the second local VLAN ID of the tenant in the second ToR;
converting, by the second ToR, the third packet into a fourth packet according to the second local VLAN ID, wherein the fourth packet carries the second local VLAN ID; and
sending, by the second ToR, the fourth packet to the second server according to the address of the second server, so that a vSwitch of the second server sends the fourth packet to the second virtual machine.

5. The method according to any one of claims 1 to 4, wherein the method further comprises:
when the central control point learns that the virtual machine of the tenant is migrated from the first server to a target server, and the target server does not belong to the first ToR or the second ToR, allocating, by the central control point to the tenant, a third local VLAN ID corresponding to a third ToR to which the target server belongs; and
delivering, by the central control point, the third local VLAN ID to the target server, and delivering a mapping relationship between the global VLAN ID of the tenant and the third local VLAN ID of the tenant to the third ToR to which the target server belongs.

6. A communications system, comprising: a central control point, a first server, and a first top of rack switch ToR to which the first server belongs, wherein:
the central control point is configured to: when learning that a virtual machine of a tenant is deployed on the first server, deliver, to the first server, a first local virtual local area network identifier VLAN ID pre-configured for the tenant, so that a virtual switch vSwitch of the first server stores a correspondence between the tenant and the first local VLAN ID and can control, according to the correspondence, communication between virtual machines of the tenant in the first ToR;
the central control point is further configured to deliver, to the first ToR, a first mapping relationship that is between a global VLAN ID and the first local VLAN ID and is pre-configured for the tenant; and
the first ToR is configured to receive and store the first mapping relationship that is between the global VLAN ID and the first local VLAN ID, is pre-configured for the tenant, and is delivered by the central control point, and control communication between virtual machines of the tenant in different servers according to the first mapping relationship.

7. The system according to claim 6, wherein after the central control point delivers, to the first ToR, the first mapping relationship that is between the global VLAN ID and the first local VLAN ID and is pre-configured for the tenant,
the vSwitch of the first server is configured to receive a first packet sent by a first virtual machine of the tenant to a second virtual machine, wherein the first packet carries a MAC address of the first virtual machine and a MAC address of the second virtual machine; when determining, according to the MAC address of the second virtual machine and a MAC table, that the second virtual machine and the first virtual machine do not belong to a same server, search for the first local VLAN ID of the tenant according to the MAC address of the first virtual machine and the MAC table; add the first local VLAN ID of the tenant into the first packet, to obtain a second packet; and send the second packet to the first ToR to which the first server belongs, so that the first ToR sends the second packet to the second virtual machine.

8. The system according to claim 7, wherein the system further comprises: a second ToR to which the second virtual machine belongs, and after the vSwitch of the first server sends the second packet to the first ToR to which the first server belongs,
the first ToR is further configured to: when determining that the second virtual machine and the first virtual machine do not belong to a same ToR, obtain the global VLAN ID of the tenant according to the first local VLAN ID in the received second packet and the locally-stored first mapping relationship between the first local VLAN ID and the global VLAN ID of the tenant; convert the second packet into a third packet according to the global VLAN ID of the tenant, wherein the third packet carries the global VLAN ID of the tenant; and send the third packet to the second ToR, so that the second ToR sends the third packet to the second virtual machine.

9. The system according to claim 8, wherein the system further comprises: a second server in which the second virtual machine is located, and after the first ToR sends the third packet to the second ToR,
the second ToR is configured to parse the third packet to obtain the global VLAN ID of the tenant, and obtain an address of the second server in which the second virtual machine is located; search, according to the global VLAN ID, for a locally-stored second mapping relationship between a second local VLAN ID and the global VLAN ID of the tenant, to obtain the second local VLAN ID of the tenant in the second ToR; convert the third packet into a fourth packet according to the second local VLAN ID, wherein the fourth packet carries the second local VLAN ID; and send the fourth packet to the second server according to the address of the second server, so that a vSwitch of the second server sends the fourth packet to the second virtual machine.

10. The system according to any one of claims 6 to 9, wherein:
the central control point is further configured to: when learning that the virtual machine of the tenant is migrated from the first server to a target server, and the target server does not belong to the first ToR or the second ToR, allocate, to the tenant, a third local VLAN ID corresponding to a third ToR to which the target server belongs; and
the central control point is further configured to deliver the third local VLAN ID to the target server, and deliver a mapping relationship between the global VLAN ID of the tenant and the third local VLAN ID of the tenant to the third ToR to which the target server belongs.
